# FASCICULE DE BREVET EUROPEEN

(11) **EP 4 407 149 B1**
(45) Date de publication et mention de la délivrance du brevet: **22.10.2025**
(21) Numéro de dépôt: 24153084.9
(22) Date de dépôt: 22.01.2024
(51) Int. Cl.: F01D 25/18, F01D 15/12, F02C 7/06, F02C 7/36

(54) **ENSEMBLE POUR UNE TURBOMACHINE COMPRENANT DES MOYENS D'EVACUATION DE LUBRIFIANT ET TURBOMACHINE EQUIPEE D'UN TEL ENSEMBLE**
ANORDNUNG FÜR EINE STRÖMUNGSMASCHINE MIT SCHMIERMITTELABFÜHRUNGSMITTELN UND STRÖMUNGSMASCHINE MIT EINER SOLCHEN ANORDNUNG
ASSEMBLY FOR A TURBINE ENGINE COMPRISING LUBRICANT DISCHARGE MEANS AND TURBINE ENGINE EQUIPPED WITH SUCH AN ASSEMBLY

(30) Priorité: 30.01.2023 FR 2300847
(43) Date de publication de la demande: 31.07.2024
(73) Titulaire: Safran Transmission Systems, 92700 Colombes (FR)
(72) Inventeur: MOULY, Guillaume Pierre, 77550 MOISSY-CRAMAYEL (FR); BECK, Guillaume Julien, 77550 MOISSY-CRAMAYEL (FR); MORELLI, Boris Pierre Marcel, 77550 MOISSY-CRAMAYEL (FR); PENNACINO, Antoine Jacques Marie, 77550 MOISSY-CRAMAYEL (FR); SEREY, Jean-Pierre, 77550 MOISSY-CRAMAYEL (FR)
(74) Mandataire: Gevers & Orès

(56) Documents cités:
- EP-A1- 3 473 893
- WO-A1-2020/245529
- FR-A1- 3 084 427
- US-A1- 2019 226 575
- US-A1- 2020 032 710

## Description

### Domaine de l'invention

La présente invention concerne le domaine général de l'aéronautique. Elle vise en particulier la lubrification d'organes rotatifs tels qu'un réducteur de vitesse et la récupération du lubrifiant éjecté par les organes rotatifs par effet centrifuge.

### Arrière-plan technique

L'art antérieur comprend les documents WO-A1-2020/245529, US-A1-2020/032710, EP-A1-3473893, US-A1-2019/226575.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé fan). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou compound.
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique.

Il existe plusieurs types d'engrènement par contact comme avec des dentures droites, hélicoïdales ou en chevron.

La solution proposée ci-dessous est compatible
- d'un réducteur simple ou à plusieurs étages ;
- d'un réducteur planétaire ou différentiel ;
- de dentures chevron.

Un réducteur de vitesse nécessite une lubrification importante de plusieurs milliers de litres par heure dans toutes les circonstances pour le bon fonctionnement de la turbomachine et son rendement. En effet, lorsque le réducteur de vitesse n'est pas suffisamment lubrifié, les frottements entre les dents des pignons d'engrenage ou au niveau des paliers entraînent leurs usures prématurées et ainsi une baisse du rendement du réducteur de vitesse. Ces paliers, roues et/ou pignons d'engrenage d'un réducteur de vitesse peuvent générer une puissance thermique élevée qui doit être évacuée par le lubrifiant pour éviter l'endommagement du réducteur de vitesse.

Le lubrifiant doit être également évacué du réducteur de vitesse le plus rapidement possible de manière d'une part, à maximiser les performances de celui-ci et d'autre part, à limiter le volume du réservoir et donc l'encombrement et la masse embarquée du système de lubrification. Par ailleurs, cela contribue à l'amélioration de la performance de la turbomachine dans son ensemble.

Pour cela, une gouttière de récupération du lubrifiant éjecté par effet centrifuge est disposée autour de la couronne du réducteur de vitesse. Un exemple de réducteur de vitesse avec une gouttière de récupération est décrit dans le document EP-A1-3575562.

Cependant, la gouttière est généralement fixée au stator de la turbomachine lorsque la couronne est mobile en rotation et peut présenter un débordement de sorte que la récupération du lubrifiant n'est pas complète, ni efficace. Une telle problématique pourrait impacter la masse de la turbomachine puisqu'il faudrait prévoir une gouttière avec des dimensions plus importantes pour recevoir une plus grande quantité de lubrifiant. De plus, le lubrifiant doit circuler facilement sur la circonférence interne de la gouttière sans obstacle pour maîtriser sa récupération qui peut être réalisée à un point bas (à 6h) et/ou à un point haut (12h) de la turbomachine. Si le lubrifiant est ralenti sur le chemin de récupération cela crée une accumulation et le débordement puis le déversement n'importe où dans l'enceinte où la récupération semble moins efficace.

### Résumé de l'invention

L'objectif de la présente invention est de fournir une solution permettant d'éviter les risques de débordement lors de l'évacuation du lubrifiant tout en évitant d'impacter la masse de l'ensemble comprenant un réducteur de vitesse considérablement.

Nous parvenons à cet objectif conformément à l'invention grâce à un ensemble de turbomachine selon la revendication 1.

Ainsi, cette solution permet d'atteindre l'objectif susmentionné. En particulier, avec une telle configuration, le lubrifiant peut être évacué en un point donné sans risque de créer de débordement. L'agencement du dispositif d'évacuation permet de conserver la force motrice du lubrifiant qui est en rotation permanente dans la gouttière. Par ailleurs, l'évacuation est réalisée également en un point donné dans la gouttière. Une telle solution est simple à mettre en œuvre et économique. Cette solution ne nécessite pas de modifications substantielles dans la turbomachine.

L'ensemble de turbomachine comprend également l'une ou plusieurs des caractéristiques suivantes, prises seules ou en combinaison :
- la couronne externe est mobile en rotation autour de l'axe longitudinal.
- chaque pignon satellite comprend une même denture engrenant avec le pignon solaire et la couronne externe.
- chaque pignon satellite comprend une première denture d'un premier diamètre moyen s'engrenant avec le pignon solaire, et une seconde denture d'un deuxième diamètre moyen, différent du premier diamètre moyen, s'engrenant avec la couronne externe.
- la couronne externe comprend une bride radiale de fixation à laquelle est fixée une patte radiale de la gouttière, la bride radiale de fixation comprenant des moyens d'éjection du lubrifiant à l'extérieur du réducteur de vitesse.
- la couronne externe est formée de deux demi-couronnes qui comprennent respectivement une première demi-bride et une deuxième demi-bride, la première demi-bride et la deuxième demi-bride formant la bride radiale de fixation et étant fixées l'une contre l'autre par des organes de fixation.
- la zone de collecte de la gouttière est décalée axialement de la bride radiale de fixation par rapport à un plan médian P de la couronne externe perpendiculaire à l'axe longitudinal X.
- la zone de collecte de la gouttière est délimitée par une paroi de rétention ayant une section axiale en forme de U, de C ou semi-circulaire, la paroi de rétention étant reliée à la patte radiale via une paroi de guidage qui est inclinée par rapport à l'axe longitudinal X.
- la paroi de guidage de la gouttière présente un point d'inflexion à la jonction avec la paroi de rétention.
- la zone de collecte de la gouttière est en regard de la bride radiale de fixation.
- le dispositif d'évacuation comprend une première extrémité agencée dans la zone de collecte et une deuxième extrémité agencée à l'extérieur de la zone de collecte.
- le dispositif d'évacuation comprend au moins une conduite comprenant plusieurs portions s'étendant suivant des directions différentes les unes des autres, la conduite comprenant une entrée qui débouche dans la zone de collecte de la gouttière de manière à évacuer le lubrifiant situé dans la zone de collecte vers une zone d'évacuation de lubrifiant située à l'extérieur de la gouttière.
- le dispositif d'évacuation comprend au moins un déflecteur dont une première portion est agencée dans la zone de collecte de la gouttière, la première portion présentant une surface déflectrice configurée de manière à évacuer le lubrifiant situé dans la zone de collecte vers une zone d'évacuation de lubrifiant située à l'extérieur de la gouttière.
- le dispositif d'évacuation comprend une extrémité agencée dans la zone de collecte et qui est biseautée de manière à évacuer le lubrifiant situé dans la zone de collecte vers une zone d'évacuation de lubrifiant située à l'extérieur de la gouttière.
- chaque pignon satellite comportant un corps cylindrique et un voile annulaire s'étendant sensiblement radialement vers l'extérieur depuis le milieu de ce corps cylindrique, les dents de la seconde denture étant situées aux extrémités axiales du corps, et les dents de la première denture étant situées à la périphérie externe du voile.
- le dispositif d'évacuation comprend au moins un point d'inflexion.
- la zone de collecte comprend au moins un point d'inflexion.
- la paroi de gouttière comprend au moins un point d'inflexion.
- les moyens d'éjection débouchent sur la périphérie externe de la bride radiale de fixation.
- le réducteur de vitesse est à train d'engrenage planétaire ou est un réducteur de vitesse différentiel à train d'engrenage épicycloïdal.
- les satellites sont à simple étage ou à double étage.

L'invention concerne également une turbomachine comprenant un tel ensemble.

L'invention concerne en outre un aéronef comprenant une turbomachine telle que susmentionnée.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 est une vue en coupe axiale d'un exemple de turbomachine à laquelle s'applique l'invention;
La figure 2 est une vue en coupe axiale et partielle d'un réducteur de vitesse installé dans une turbomachine selon l'invention;
La figure 3 est une vue en coupe axiale et de détail de la figure 2 ;
La figure 4 est une vue en coupe axiale et partielle d'un organe d'un réducteur de vitesse selon l'invention;
La figure 5 représente via une vue en coupe radiale un premier mode de réalisation d'un dispositif de récupération de lubrifiant coopérant avec un réducteur de vitesse selon l'invention ;
La figure 6 représente un deuxième mode de réalisation d'un dispositif de récupération de lubrifiant coopérant avec un réducteur de vitesse selon l'invention ;
La figure 7 est une vue schématique et en perspective d'un mode de réalisation d'un dispositif d'évacuation d'un lubrifiant vers un réservoir d'alimentation de lubrifiant, le dispositif d'évacuation étant installé au moins en partie dans un dispositif de récupération de lubrifiant selon l'invention ;
La figure 8 illustre en perspective, partiellement et en détail une partie du dispositif d'évacuation selon la figure 7 ; et
La figure 9 représente un autre mode de réalisation d'une partie du dispositif d'évacuation du lubrifiant selon l'invention.

### Description détaillée de l'invention

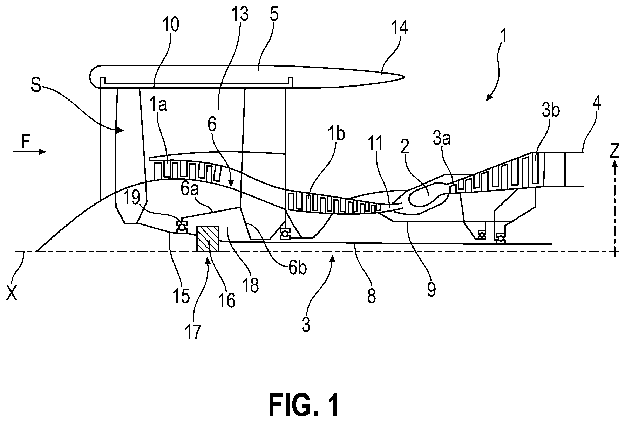

La figure 1 montre une vue en coupe axiale d'une turbomachine 1 d'axe longitudinal X comprenant un système de transmission de puissance et à laquelle s'applique l'invention.

Dans la présente invention, les termes « amont » et « aval » sont définis par rapport à la circulation des gaz dans la turbomachine et ici suivant l'axe longitudinal X et en référence à la figure 1 de gauche à droite. De même, une turbomachine se compose généralement de plusieurs modules qui sont fabriqués indépendamment les uns des autres et qui sont assemblés ensuite les uns aux autres de manière à faciliter son assemblage, son démontage ainsi que sa maintenance.

La turbomachine 1 comporte, de manière classique, une soufflante S, un compresseur basse pression 1a, un compresseur haute pression 1b, une chambre annulaire de combustion 2, une turbine haute pression 3a, une turbine basse pression 3b et une tuyère d'échappement 4. Le compresseur haute pression 1b et la turbine haute pression 3a sont reliés par un arbre haute pression 9 et forment avec lui un corps haute pression (HP). Le compresseur basse pression 1a et la turbine basse pression 3b sont reliés par un arbre basse pression 8 et forment avec lui un corps basse pression (BP).

La soufflante S est carénée par un carter de soufflante 10 porté par une nacelle externe 5. La soufflante S génère, à partir d'un flux d'air F entrant dans la soufflante, un flux d'air primaire qui circule dans une veine primaire 11 débouchant dans la tuyère d'échappement 4 et un flux d'air secondaire qui circule dans une veine secondaire 13, autour de la veine primaire 11, débouchant dans une tuyère d'éjection 14.

La soufflante S est entraînée en rotation par un arbre de soufflante 15 qui est lui-même entrainé en rotation par l'arbre basse pression 8 via un réducteur de vitesse 16. Le système de transmission de puissance comprend le réducteur de vitesse 16. Ce dernier est généralement de type planétaire ou épicycloïdal.

Bien que la description qui suit concerne particulièrement un réducteur du type planétaire, elle peut s'appliquer à un réducteur de type épicycloïdal ou encore s'appliquer également à un différentiel mécanique dans lequel les trois composants, que sont le porte-satellites 22, la couronne externe 23 et le pignon solaire 20, sont mobiles en rotation, la vitesse de rotation de l'un de ces composants dépendant notamment de la différence de vitesses des deux autres composants.

Le réducteur 16 (ou RGB) est positionné dans la partie amont de la turbomachine dans le présent exemple. Bien entendu, le réducteur 16 pourrait être agencé en aval de la turbomachine.

Une structure fixe comportant schématiquement, ici, une partie amont 6a et une partie aval 6b qui compose le carter moteur ou stator 6 est agencée de manière à former une enceinte 18 entourant le réducteur 16. Un brouillard de lubrifiant règne dans l'enceinte 18. Cette enceinte 18 est ici fermée en amont par des joints au niveau d'un palier amont 19 permettant la traversée de l'arbre de soufflante 15, et en aval par des joints au niveau de la traversée de l'arbre basse pression 8.

La turbomachine 1 décrite est une turbomachine 1 double flux destinée à être montée sur un aéronef. Bien entendu, l'invention peut être appliquée à d'autres types de turbomachines telles que des turbopropulseurs équipés d'une seule hélice non carénée ou d'un doublet d'hélices contrarotatives, non carénées, et connus sous l'expression anglaise « open rotor ». L'invention peut s'appliquer à d'autres domaines dans lesquels un réducteur de vitesse est nécessaire.

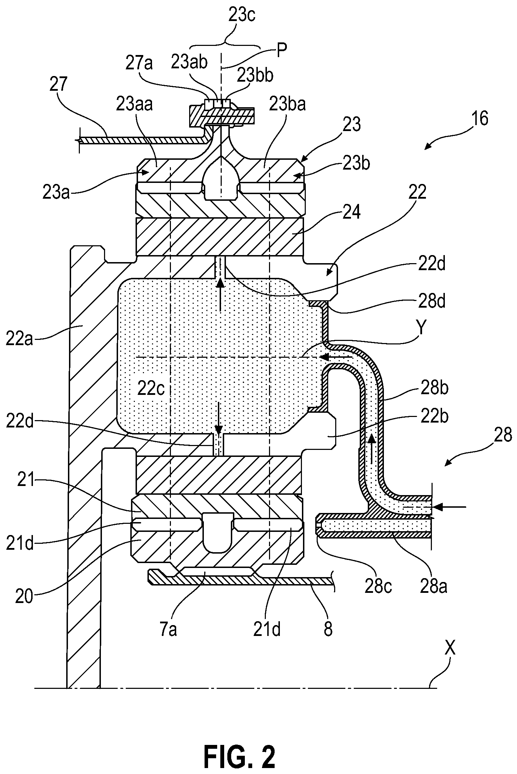

La figure 2, décrit un réducteur 16 qui peut prendre la forme de différentes architectures selon si certaines pièces sont fixées ou en rotation.

En entrée, le réducteur 16 est relié à l'arbre basse pression 8, par exemple par l'intermédiaire de cannelures 7a. Ainsi l'arbre basse pression 8 entraîne un pignon planétaire appelé le solaire 20. Classiquement, le solaire 20, dont l'axe de rotation est confondu avec celui de l'axe longitudinal X de la turbomachine, entraîne une série de pignons satellites appelés satellites 21, qui sont équirépartis sur le même diamètre autour de l'axe longitudinal de rotation X. Ce diamètre est égal au double de l'entraxe de fonctionnement entre solaire 20 et satellites 21. Le nombre de satellites 21 est généralement défini entre trois et sept pour ce type d'application.

L'ensemble des satellites 21 est maintenus par un châssis appelé porte-satellites 22. Chaque satellite 21 tourne autour de son propre axe Y, et engrène la couronne 23 externe.

En sortie nous avons :
- Dans une configuration épicycloïdale, l'ensemble des satellites 21 entraine en rotation le porte-satellite 22 autour de l'axe X de la turbomachine. La couronne 23 est fixée au carter moteur ou stator 6 via un porte-couronne 27 et le porte-satellites 22 est fixé à l'arbre de soufflante 15.
- Dans une configuration planétaire, l'ensemble des satellites 21 est maintenu par un porte-satellites 22 qui est fixé au carter moteur ou stator 6. Chaque satellite entraine la couronne qui est rapportée à l'arbre de soufflante 15 via un porte-couronne 27. La couronne externe 23 est mobile en rotation autour de l'axe longitudinal X.

Dans le cas du présent exemple, le réducteur de vitesse (ou RGB) comprend un train d'engrenage planétaire.

Chaque satellite 21 est monté libre en rotation à l'aide d'un palier 24, par exemple de type roulement ou palier hydrodynamique. De manière générale, un palier hydrodynamique est alimenté avec des pressions « faibles » (usuellement inférieures à 10 bars). La rotation du palier permet de faire monter en pression le coin d'huile et de séparer les satellites et les paliers. Chaque palier 24 (cf. figure 2) est monté sur un des axes du porte-satellites 22 et tous les axes sont positionnés les uns par rapport aux autres à l'aide d'un ou plusieurs châssis structurels 22a du porte-satellites 22. Chaque satellite 21 engrène avec des dentures externes du solaire 20 et des dentures internes de la couronne externe 23. Les dentures internes de la couronne externe 23 peuvent être droites (parallèle à l'axe longitudinal), hélicoïdales ou en chevron.

Il existe un nombre d'axes et de paliers égal au nombre de satellites. Pour des raisons de fonctionnement, de montage, de fabrication, de contrôle, de réparation ou de rechange les axes et le châssis peuvent être séparés en plusieurs pièces.

Pour les mêmes raisons citées précédemment, la denture d'un réducteur 16 peut être séparée en plusieurs hélices. Dans notre exemple nous détaillons le fonctionnement d'un réducteur à plusieurs hélices avec une couronne séparée en deux demi-couronnes:
- Une demi-couronne avant 23a constituée d'une jante 23aa et d'une demi-bride de fixation 25a. Sur la jante 23aa se trouve l'hélice avant de la denture du réducteur. Cette hélice avant engrène avec celle du satellite 21 qui engrène avec celle du solaire 20.
- Une demi-couronne arrière 23b constituée d'une jante 23ba et d'une demi-bride de fixation 25b. Sur la jante 23ba se trouve l'hélice arrière de la denture du réducteur. Cette hélice arrière engrène avec celle du satellite 21 qui engrène avec celle du solaire 20.

La demi-bride de fixation 25a de la couronne avant 23a et la demi-bride de fixation 25b de la couronne arrière 23b forment la bride de fixation 25 de la couronne. La couronne 23 est fixée à un porte-couronne en assemblant la bride de fixation 23c de la couronne et la bride de fixation 27a du porte-couronne 27. La fixation est réalisée ici grâce aux organes de fixation. Ces organes de fixation peuvent avantageusement former un montage boulonné par exemple.

Dans cet exemple de réalisation, les dentures internes de la couronne externe 23 peuvent être en chevron avec des hélices qui sont séparées suivant un plan médian P. Dans ce cas, la première demi-couronne 23a comprend des premières hélices et la deuxième demi-couronne 23b comprend des deuxièmes hélices. Les premières et deuxièmes hélices des dentures internes engrènent avec les dentures externes des satellites 21 lesquelles engrènent avec celles du solaire 20.

Les flèches de la figure 2 décrivent l'acheminement du lubrifiant dans le réducteur 16. Le lubrifiant arrive dans le réducteur 16 depuis la partie stator 6 dans un distributeur 28 par différents moyens qui ne seront pas précisés dans cette vue car ils sont spécifiques à un ou plusieurs types d'architecture. Le distributeur 28 est séparé en deux parties en général chacune répétée du même nombre de satellite. Des injecteurs 28a ont pour fonction de lubrifier les dentures et les bras 28b ont pour fonction de lubrifier les paliers. Le lubrifiant est amené vers l'injecteur 28a pour ressortir par l'extrémité 28c afin de lubrifier les dentures. Le lubrifiant est également amené vers le bras 28b et circule via la bouche d'alimentation 28d du palier. Le lubrifiant circule ensuite à travers l'axe dans une ou des zones tampons 22c pour ensuite ressortir par les orifices 22d afin de lubrifier les paliers des satellites.

Le terme « radial » est défini par rapport à un axe radial Z perpendiculaire à l'axe longitudinal X.

Les réducteurs peuvent être composés d'un ou de plusieurs étages d'engrènement. Cet engrènement est assuré de différentes façons comme par contact, par friction ou encore par champs magnétique. Il existe plusieurs types d'engrènement par contact comme avec des dentures droites, hélicoïdales ou en chevron.

Dans la présente demande, nous entendons par le terme « étage » une première série de dents d'engrènement d'un pignon qui engrène avec une deuxième série de dents complémentaires d'un autre pignon. Dans le réducteur de vitesse, le nombre d'étage se réfère en particulier aux satellites.

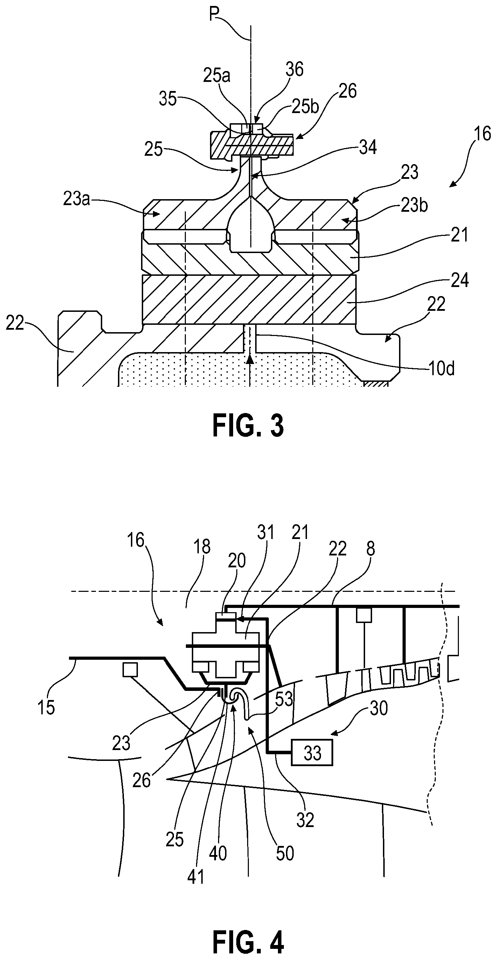

De manière avantageuse, mais non limitativement, le réducteur de vitesse illustré sur les figures 2 et 3 est du type à un étage (ou simple étage) qui permet d'avoir une architecture simple et compact. C'est la même denture d'un satellite qui coopère avec le solaire 20 et la couronne 23.

Suivant une autre alternative, le réducteur de vitesse 16 peut être de type à double étage comme c'est le cas de la figure 4. En particulier, chaque satellite est à double étage et comprend deux dentures distinctes qui sont situées sur des diamètres différents. Une première denture de chaque satellite coopère avec le solaire 20 et une seconde denture de chaque satellite coopère avec la couronne externe 23. La première denture qui engrène avec le solaire 20 a un premier diamètre moyen et est situé dans un premier plan médian. La seconde denture qui engrène avec la couronne 23 a un deuxième diamètre moyen et est situé dans un deuxième plan médian P. Les plans médians sont parallèles entre eux et perpendiculaires à l'axe X. Le deuxième diamètre est inférieur au premier diamètre. Chaque première et seconde denture peut comprendre une seule hélice ou peut comprendre deux séries de dents en chevron.

De manière avantageuse, chaque pignon satellite 21 comporte un corps cylindrique et un voile annulaire s'étendant sensiblement radialement vers l'extérieur depuis le milieu de ce corps. La seconde denture est séparée en deux séries de dents en chevron qui sont situées respectivement sur les extrémités axiales du corps. La première denture comprend deux séries de dents en chevron qui sont situées à la périphérie externe du voile et qui sont séparées l'une de l'autre par une rainure annulaire débouchant radialement vers l'extérieur par rapport à l'axe Y. Les dents des dentures sont disposées de manière symétrique par rapport au plan passant par le milieu des dentures.

Une telle architecture double étage permet d'améliorer les rapports de réduction tout en gardant un encombrement radial et une masse réduite.

L'engrènement des différentes dentures internes et externes ainsi que les efforts importants appliqués au sein de l'engrenage du réducteur de vitesse 16 nécessitent une lubrification importante et un refroidissement.

En référence à la figure 4, la turbomachine 1 comprend pour cela un système de lubrification 30 équipé entre autres du distributeur 28 qui injecte le lubrifiant dans le réducteur de vitesse 16. La turbomachine comprend en outre un circuit de lubrifiant 32 relié d'une part, au distributeur 28 et d'autre part, à un réservoir d'alimentation 33. Le lubrifiant traverse les différents engrenages pour être éjecté par centrifugation radialement vers l'extérieur du réducteur de vitesse 16.

En référence à la figure 3, la couronne externe 23 comprend avantageusement des moyens d'éjection 34 par lesquels le lubrifiant est éjecté à l'extérieur du réducteur de vitesse 16. Le lubrifiant est également injecté au niveau des paliers de guidage en rotation de l'arbre de soufflante 15.

Les moyens d'éjection 34 comprennent un ou plusieurs canaux 35, tels que représentés sur la figure 3, qui sont par exemple régulièrement répartis au moins sur la circonférence de la couronne externe 23. Ces canaux 35 débouchent d'une part, sur la périphérie interne de la couronne externe 23 sur laquelle sont définies les dentures internes (non représentées). D'autre part, les canaux 35 débouchent sur la périphérie externe 36 de la bride de fixation 25 de la couronne externe 23. Le lubrifiant circule depuis l'intérieur de la couronne externe 23 vers l'extérieur de cette dernière via le ou les canaux 35. Le lubrifiant qui circule au niveau de la circonférence de la couronne externe 23 s'évacue également entre l'arbre de soufflante et la couronne externe.

En référence à la figure 4, un dispositif de récupération 40 complète l'ensemble et est prévu pour récupérer et évacuer rapidement le lubrifiant éjecté par effet centrifuge dans la turbomachine et en particulier dans l'enceinte 18. Le dispositif de récupération 40 comprend une gouttière 41 qui est annulaire et qui est centrée sur l'axe longitudinal. La gouttière 41 est agencée autour de la couronne externe 23.

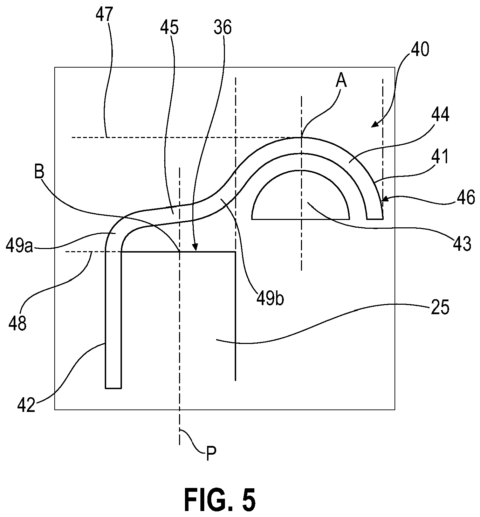

En référence à la figure 5, la gouttière 41 est solidaire en rotation de la couronne externe 23. Pour cela, la gouttière 41 comprend une patte radiale 42 qui est fixée à la bride radiale de fixation 25 de la couronne externe 23. La patte radiale 42 est également annulaire. Dans le cas de la couronne externe avec deux brides, la patte radiale 42 est fixée à la première demi-bride 25a. La patte radiale 42 peut également être fixée sur la virole radiale de l'arbre de soufflante 15. La fixation se fait avantageusement avec les mêmes organes de fixation 26.

La gouttière 41 comprend également une zone de collecte 43 ou chambre de récupération dans laquelle est reçue une grande quantité de lubrifiant. La zone de collecte 43 est délimitée par une paroi de rétention 44 ayant une forme en U ou en C ou encore semi-circulaire (dans un plan axial). La paroi de rétention 44 est également annulaire et centrée sur l'axe longitudinal X. La paroi de rétention 44 est reliée à la patte radiale 42. La zone de collecte est en regard de la couronne externe 23.

Dans le mode de réalisation de la figure 5, la gouttière 41 comprend une paroi de guidage 45 qui relie la paroi de rétention 44 à la patte radiale 42. En d'autres termes, la paroi de guidage 45 est située entre la patte radiale 42 et la paroi de rétention 44. La paroi de guidage 45 est disposée en regard de la périphérie externe 36 de la bride radiale de fixation 25. En particulier, la paroi de guidage 45 est en regard des moyens d'éjection 34 du lubrifiant.

La zone de collecte 43 est décalée axialement par rapport au plan médian P de la couronne externe 23, perpendiculaire à l'axe longitudinal X. Ici, la zone de collecte 43 est située à droite de la bride radiale de fixation 25 de la couronne externe 23. Bien entendu la zone de collecte 43 pourrait être disposée, à l'opposé, soit à gauche de la bride radiale de fixation 25. Cette configuration permet de limiter l'encombrement radial. L'agencement de la zone de collecte 43 en décalé axial permet de bénéficier de l'espace axial existant dans cette partie de l'enceinte 18.

Le fond de la paroi de rétention 44 se trouve radialement à l'extérieur de la paroi de guidage 45 et de la périphérie externe 36 de la bride radiale de fixation 25. Une première droite 47 tangente à une surface externe 46 de la gouttière 41 passant par un point A situé dans un plan médian de la paroi de rétention 44 (dans le plan de la figure 5) est disposée à une distance prédéterminée d'une deuxième droite 48 tangente à la périphérie externe 36 de la bride radiale de fixation 25. La deuxième droite tangente 48 passe par un point B situé dans le plan médian P.

De manière avantageuse, la paroi de la gouttière 41 présente au moins un point d'inflexion. Plus précisément encore, la gouttière 41 présente un point d'inflexion entre la patte radiale 42 et la paroi de guidage 45. Une première portion courbe 49a comprenant un point d'inflexion est située entre la patte radiale 42 et la paroi de guidage 45. Cette première portion courbe 49a est de forme concave en regard de la couronne externe 23. Une deuxième portion courbe 49b comprenant un point d'inflexion est située entre la paroi de guidage 45 et la paroi de rétention 44. La deuxième portion courbe 49b est de forme convexe en regard de la couronne externe 23. Ces courbures permettent une meilleure circulation du lubrifiant sur la surface interne des différentes parois de la gouttière 41 jusqu'à la zone de collecte 43.

Afin d'éviter également les pertes de lubrifiant dans la gouttière 41, la paroi de guidage présente une inclinaison par rapport à l'axe longitudinal X. Avantageusement, la paroi de guidage 45 n'est pas trop inclinée (angle inférieur à 90°) ni trop plate (angle supérieur à 0°) par rapport à l'axe longitudinal X. Une paroi de guidage 45 très inclinée ne permettrait pas à un maximum de lubrifiant d'être acheminé vers la zone de collecte 43. Un angle d'inclinaison important éloignerait de manière significative la paroi de guidage 45 des moyens d'éjection 34 et les projections de lubrifiant ne seraient pas redirigées vers la zone de collecte 43 de manière efficace. À titre d'exemple, l'angle d'inclinaison de la direction de la paroi de guidage 45 peut être compris entre 50° et 25° par rapport à l'axe longitudinal X. De la sorte, en cas de projection, le lubrifiant peut être reçu dans la zone de collecte 43 sans perte.

La gouttière 41 est avantageusement réalisée en une seule pièce. La gouttière peut être réalisée par un procédé de fabrication additive, par des procédés d'usinage classique ou par fonderie.

La gouttière 41 est réalisée dans un matériau métallique ou dans un alliage métallique avantageusement.

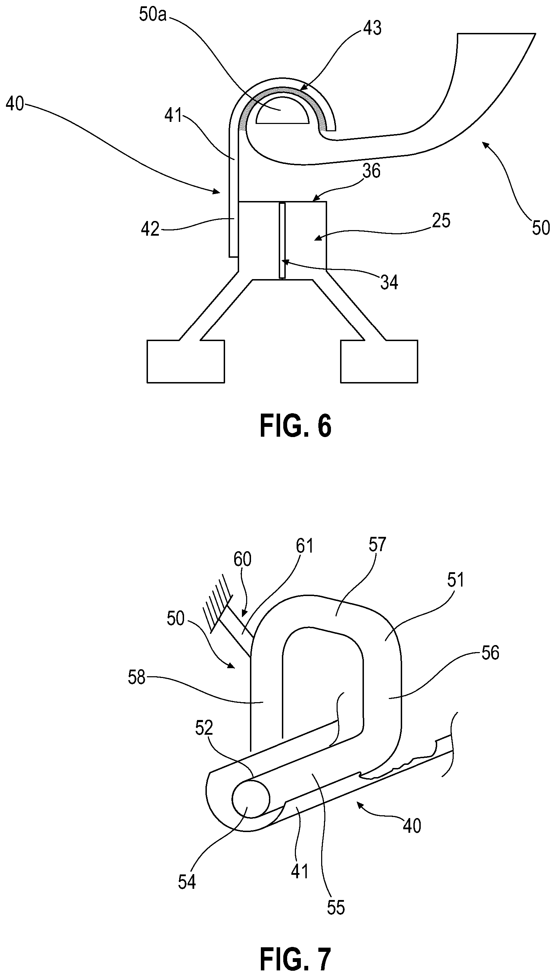

En référence à la figure 6, l'ensemble comprenant le réducteur de vitesse comprend également un dispositif d'évacuation 50 du lubrifiant à l'extérieur de la gouttière 41 qui est agencé dans la turbomachine. Ce dispositif d'évacuation 50 est avantageusement destiné à éviter les éventuels débordements de lubrifiant de la gouttière 41. Le dispositif d'évacuation 50 s'étend au moins en partie dans la zone de collecte 43, soit dans la gouttière 41. Le dispositif d'évacuation 50 est configuré de manière à évacuer le lubrifiant situé dans la zone de collecte 43 vers une zone d'évacuation d'huile située à l'extérieur de la gouttière. Avantageusement, le dispositif d'évacuation 50 est fixé au stator 6 de la turbomachine. En particulier, le dispositif d'évacuation 50 est fixé à un carter de la turbomachine 1. De manière avantageuse, le dispositif d'évacuation 50 est distinct du réducteur de vitesse 16. Le dispositif d'évacuation 50 monté solidaire du carter de la turbomachine. Nous comprenons alors qu'une telle disposition permet d'évacuer le maximum de lubrifiant pendant la rotation de la gouttière qui collecte le lubrifiant et de conserver la force motrice du lubrifiant qui est en rotation permanente dans la gouttière.

De manière avantageuse, le dispositif d'évacuation 50 comprend une première extrémité agencée dans la zone de collecte 43 et une deuxième extrémité agencée à l'extérieur de la zone de collecte 43.

En référence aux figures 4, 5, 6, 7 et 8, le dispositif d'évacuation 50 comprend une conduite 51 dont au moins une portion est installée dans la gouttière 41. Plus précisément, une entrée 52 de la conduite 51 est disposée ou débouche dans la zone de collecte 43. L'entrée 52 de la conduite forme la première extrémité du dispositif d'évacuation. La conduite 51 comprend une sortie 53 (cf. figure 4) qui est reliée à un circuit de récupération de la turbomachine. La sortie 53 de la conduite forme la deuxième extrémité du dispositif d'évacuation 50. La sortie 53 peut être reliée dans cet exemple au réservoir d'alimentation 33. De la sorte, le lubrifiant est collecté par l'entrée 52 et est canalisé à l'intérieur de la conduite 51 jusqu'à la sortie 53.

Suivant une alternative, la sortie 53 est reliée à une pompe d'aspiration (non représentée) d'un circuit de récupération. Suivant encore une autre alternative, la sortie 53 est disposée librement dans un réservoir de stockage agencé dans le fond de l'enceinte. Dans ce cas le lubrifiant est aspiré avec le reste de lubrifiant des organes de l'enceinte avant (paliers de soufflante, etc.) par une pompe d'aspiration unique.

Dans l'exemple représenté sur la figure 7, la conduite 51 présente une section circulaire. De manière alternative, la conduite 51 présente une section semi-circulaire ou en U ou en C. Une ouverture 54 (au niveau de l'entrée 52) débouche à l'intérieur de la conduite 51.

La figure 6 illustre un autre mode de réalisation de la gouttière 41. La gouttière 41 diffère du mode de réalisation de la figure 4 en ce que la zone de collecte 43 est située en regard de la bride radiale de fixation 25. Il n'y a pas de décalage axial de la zone de collecte 43. Dans cet exemple, une grande partie du lubrifiant qui est éjecté des moyens d'éjection 34 au niveau de la bride radiale de fixation 25, est reçue directement dans la zone de collecte 43. Une partie du lubrifiant peut circuler sur la surface interne de la paroi de guidage 45 qui s'étend suivant l'axe radial ou sensiblement suivant l'axe radial. La paroi de guidage 45 peut être inclinée par rapport à l'axe radial suivant un angle d'inclinaison compris entre 3° et 10°.

Suivant une caractéristique avantageuse telle que représentée sur la figure 7, la conduite 51 comprend au moins un point d'inflexion pour faciliter l'agencement par rapport à la gouttière. De manière avantageuse, la conduite comprend plusieurs courbures qui permettent l'agencement de celle-ci par rapport à la gouttière 41 tournante et la collecte du lubrifiant facilement. En particulier, la conduite 51 comprend des portions s'étendant suivant des directions ou dimensions différentes l'une de l'autre. Plus précisément encore, la conduite 51 comprend une première portion 55 qui s'étend suivant une direction tangentielle par rapport à la surface interne de gouttière 41. Cette direction tangentielle est parallèle à la direction circonférentielle de la gouttière 41. L'ouverture 54 de la conduite 51 au niveau de l'entrée 52 est en regard de l'écoulement de lubrifiant. De la sorte, le lubrifiant peut rentrer facilement et directement dans la conduite 51. Cette dernière comprend une deuxième portion 56 qui s'étend globalement (parallèlement ou suivant une inclinaison de par exemple 5°) suivant la direction radiale de manière à pouvoir extraire le lubrifiant de la gouttière 41. La conduite 51 comprend une troisième portion 57 qui s'étend globalement (parallèlement ou suivant une inclinaison de par exemple 5°) suivant une direction parallèle à l'axe longitudinal de sorte à décaler axialement la conduite de la gouttière 41. Cette configuration permet également la rotation de la gouttière 41 par rapport à la conduite 51 qui est fixe. Enfin, la conduite 51 comprend une quatrième portion 58 qui est reliée au réservoir d'alimentation 33. Ces première, deuxième, troisième et quatrième portions 55, 56, 57, 58 sont reliées entre elles par des portions courbées. De manière générale les changements de directions des différentes portions sont progressifs (sans arêtes brusques).

Nous pouvons voir également sur la figure 6 que la partie du dispositif d'évacuation 50 qui s'étend dans la gouttière 41 présente des courbures et présente une forme en demi-lune. Cette dernière forme un creux 50a.

De manière avantageuse, les différentes portions de la conduite 51 sont espacées d'une certaine distance pour éviter les contacts avec les parois de la gouttière et permettre la rotation de la gouttière sans obstacles.

Avec la conduite 51, le lubrifiant est écopé en un point donné et la conduite est suffisamment large pour éviter les pertes de charge. Avec cette configuration il sera possible de récupérer et d'évacuer le débit souhaité pour l'amener au point de récupération à 6h. Eventuellement le lubrifiant peut être évacué vers le réservoir 33.

Suivant une caractéristique avantageuse telle que représentée sur la figure 7, au moins un élément raidisseur 60 est prévu pour s'opposer aux développements de résonance de mouvement de la gouttière 41 tournant pendant le fonctionnement de la turbomachine. L'élément raidisseur 60 comprend un bras 61 qui s'étend entre le corps de la conduite 51 et un carter de stator de la turbomachine.

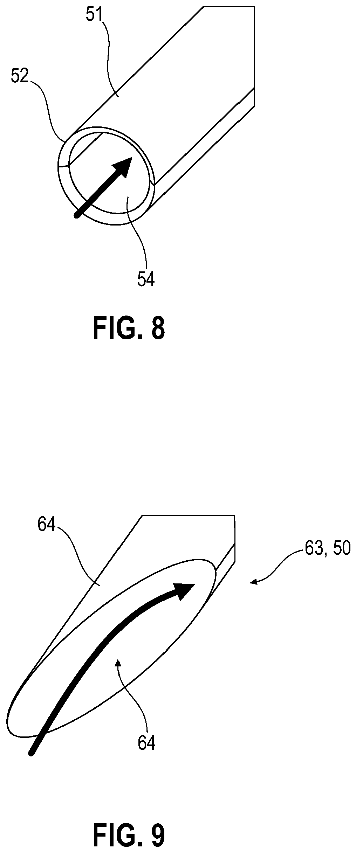

La figure 9 montre un autre mode de réalisation du dispositif d'évacuation 50. Dans ce mode de réalisation, le dispositif d'évacuation 50 comprend une extrémité qui est agencée dans la zone de collecte et qui est biseautée de manière à évacuer le lubrifiant situé dans la zone de collecte 43 vers une zone d'évacuation de lubrifiant située à l'extérieur de la gouttière 41. Dans ce mode de réalisation, le dispositif 50 comprend un déflecteur 63. Le déflecteur 63 est configuré pour dévier le lubrifiant vers un endroit prédéterminé à l'extérieur de la gouttière 41 et hors de la zone de collecte 43. Le déflecteur 63 comprend une première portion 64 agencée dans la zone de collecte 43. La première portion 64 forme la première extrémité du dispositif d'évacuation 50. Le déflecteur 63 comprend également une deuxième portion (non représentée) qui est agencée à l'extérieur de la zone de collecte 43. La deuxième portion forme la deuxième extrémité du dispositif d'évacuation. La deuxième portion est orientée vers un endroit précis de l'enceinte de lubrification 18. Plusieurs déflecteurs 63 peuvent être agencés dans la zone de collecte de la gouttière 41.

Le déflecteur 63 présente pour cela et de manière avantageuse, une surface 65 déflectrice configurée de manière à évacuer le lubrifiant situé dans la zone de collecte 43 vers une zone d'évacuation de lubrifiant située à l'extérieur de la gouttière 41. De manière avantageuse, la surface 65 est plane pour que puisse glisser et/ou circuler le lubrifiant vers l'extérieur de la gouttière 41. La surface plane 65 est portée par la première portion 64. Dans ce cas, le lubrifiant est projeté à l'endroit précis dans l'enceinte de lubrification 18 pour que l'évacuation soit maîtrisée. Selon un autre exemple de réalisation, la surface 65 du déflecteur 63 est concave ou convexe suivant les stratégies de collecte du lubrifiant dans l'enceinte du réducteur de vitesse (et les formes de l'enceinte).

Dans la présente demande le lubrifiant est de l'huile.

Le dispositif d'évacuation 50 est simple à mettre en œuvre et occupe un espace réduit dans l'enceinte. Le dispositif 20 permet d'évacuer le lubrifiant de la gouttière afin d'éviter le débordement de la gouttière 41 n'importe où dans l'enceinte.

## Revendications

1. Ensemble de turbomachine (1) s'étendant autour d'un axe (X) longitudinal et comprenant :
- un réducteur de vitesse (16) comportant un pignon solaire (20), des pignons satellites (21) et une couronne externe (23), les pignons satellites étant en prise d'une part avec le pignon solaire et d'autre part avec la couronne externe (23), et
- une gouttière de récupération (41) d'un lubrifiant éjecté par effet centrifuge du réducteur de vitesse (16) en fonctionnement, la gouttière (41) étant agencée autour de la couronne externe (23) et comprenant une zone de collecte (43) du lubrifiant reçu par éjection,
la gouttière (41) étant solidaire en rotation de la couronne externe (23),
**caractérisé en ce que** l'ensemble comprend un dispositif d'évacuation (50) du lubrifiant vers l'extérieur de la zone de collecte (43), le dispositif d'évacuation (50) étant destiné à être relié à un stator de la turbomachine (1) et s'étendant au moins en partie dans la zone de collecte (43) de la gouttière (41), le dispositif d'évacuation (50) étant configuré de manière à évacuer le lubrifiant situé dans la zone de collecte (43) vers une zone d'évacuation de lubrifiant située à l'extérieur de la gouttière (41).

2. Ensemble selon la revendication précédente, **caractérisé en ce que** la couronne externe (23) est mobile en rotation autour de l'axe longitudinal (X).

3. Ensemble selon l'une des revendications précédentes, **caractérisé en ce que** chaque pignon satellite comprend une même denture engrenant avec le pignon solaire (20) et la couronne externe (23).

4. Ensemble (16) selon l'une quelconque des revendications 1 à 2, **caractérisé en ce que** chaque pignon satellite (21) comprend une première denture d'un premier diamètre moyen s'engrenant avec le pignon solaire (20), et une seconde denture d'un deuxième diamètre moyen, différent du premier diamètre moyen, s'engrenant avec la couronne externe (23).

5. Ensemble selon l'une quelconque des revendications précédentes, **caractérisé en ce que** la couronne externe (23) comprend une bride radiale de fixation (25) à laquelle est fixée une patte radiale (42) de la gouttière (41), la bride radiale de fixation (25) comprenant des moyens d'éjection (34) du lubrifiant à l'extérieur du réducteur de vitesse (16).

6. Ensemble selon la revendication précédente, **caractérisé en ce que** la couronne externe (23) est formée de deux demi-couronnes (23a, 23b) qui comprennent respectivement une première demi-bride (25a) et une deuxième demi-bride (25b), la première demi-bride (25a) et la deuxième demi-bride (25b) formant la bride radiale de fixation (25) et étant fixées l'une contre l'autre par des organes de fixation (26).

7. Ensemble selon la revendication 5 ou 6, **caractérisé en ce que** la zone de collecte (43) de la gouttière (41) est décalée axialement de la bride radiale de fixation (25) par rapport à un plan médian (P) de la couronne externe (23) perpendiculaire à l'axe longitudinal X.

8. Ensemble selon l'une quelconque des revendications 5 à 7, **caractérisé en ce que** la zone de collecte (43) de la gouttière (41) est délimitée par une paroi de rétention (44) ayant une section axiale en forme de U, de C ou semi-circulaire, la paroi de rétention (44) étant reliée à la patte radiale (42) via une paroi de guidage (45) qui est inclinée par rapport à l'axe longitudinal X.

9. Ensemble selon la revendication 8, **caractérisé en ce que** la paroi de guidage (45) de la gouttière (41) présente un point d'inflexion (49b) à la jonction avec la paroi de rétention (44).

10. Ensemble selon l'une quelconque des revendications 5 à 6, **caractérisé en ce que** la zone de collecte (43) de la gouttière (41) est en regard de la bride radiale de fixation (25).

11. Ensemble selon l'une quelconque des revendications précédentes, **caractérisé en ce que** le dispositif d'évacuation (50) comprend une première extrémité (52) agencée dans la zone de collecte (43) et une deuxième extrémité (53) agencée à l'extérieur de la zone de collecte (43).

12. Ensemble selon l'une quelconque des revendications précédentes, **caractérisé en ce que** le dispositif d'évacuation (50) comprend au moins une conduite (51) comprenant plusieurs portions (55, 56, 57) s'étendant suivant des directions différentes les unes des autres, la conduite (51) comprenant une entrée (52) qui débouche dans la zone de collecte (43) de la gouttière (41) de manière à évacuer le lubrifiant situé dans la zone de collecte (43) vers une zone d'évacuation de lubrifiant située à l'extérieur de la gouttière (41).

13. Ensemble selon l'une quelconque des revendications 1 à 10, **caractérisé en ce que** le dispositif d'évacuation (50) comprend au moins un déflecteur (63) dont une première portion (64) est agencée dans la zone de collecte (43) de la gouttière (41), la première portion (64) présentant une surface (65) déflectrice configurée de manière à évacuer le lubrifiant situé dans la zone de collecte (43) vers une zone d'évacuation de lubrifiant située à l'extérieur de la gouttière (41).

14. Ensemble selon l'une quelconque des revendications précédentes, **caractérisé en ce que** le dispositif d'évacuation (50) comprend une extrémité agencée dans la zone de collecte (43) et qui est biseautée de manière à évacuer le lubrifiant situé dans la zone de collecte (43) vers une zone d'évacuation de lubrifiant située à l'extérieur de la gouttière (41).

15. Turbomachine (1) comprenant un ensemble selon l'une quelconque des revendications précédentes.

## Patentansprüche

1. Baugruppe eines Turbotriebwerks (1), die sich um eine Längsachse (X) herum erstreckt und Folgendes beinhaltet:
- ein Untersetzungsgetriebe (16), umfassend ein Sonnenrad (20), Planetenräder (21) und eine externe Krone (23), wobei die Planetenräder einerseits mit dem Sonnenrad und andererseits mit der externen Krone (23) in Eingriff vorliegen,
- eine Auffangrinne (41) eines Schmiermittels, das im Betrieb durch Zentrifugalwirkung des Untersetzungsgetriebes (16) ausgestoßen wird, wobei die Rinne um die externe Krone (23) herum angeordnet ist und eine Sammelzone (43) des durch den Ausstoß aufgenommenen Schmiermittels beinhaltet, wobei die Rinne (41) drehfest mit der externen Krone (23) verbunden ist,
**dadurch gekennzeichnet, dass** die Baugruppe eine Ablassvorrichtung (50) des Schmiermittels in Richtung der Außenseite der Sammelzone (43) beinhaltet, wobei die Ablassvorrichtung (50) dazu bestimmt ist, mit einem Stator des Turbotriebwerks (1) verbunden zu werden und sich mindestens zum Teil in die Sammelzone (43) der Rinne (41) zu erstrecken, wobei die
Ablassvorrichtung (50) derart konfiguriert ist, um das Schmiermittel, das sich in der Sammelzone (43) befindet, in Richtung einer Schmiermittelablasszone abzulassen, die sich an der Außenseite der Rinne (41) befindet.

2. Baugruppe nach dem vorstehenden Anspruch, **dadurch gekennzeichnet, dass** die externe Krone (23) um die Längsachse (X) herum drehbeweglich ist.

3. Baugruppe nach einem der vorstehenden Ansprüche, **dadurch gekennzeichnet, dass** jedes Planetenrad eine gleiche Verzahnung beinhaltet, die mit dem Sonnenrad (20) und der externen Krone (23) in Eingriff vorliegt.

4. Baugruppe (16) nach einem der Ansprüche 1 bis 2, **dadurch gekennzeichnet, dass** jedes Planetenrad (21) eine erste Verzahnung eines ersten mittleren Durchmessers, die mit dem Sonnenrad (20) in Eingriff vorliegt, und eine zweite Verzahnung eines zweiten mittleren Durchmessers beinhaltet, der sich von dem ersten mittleren Durchmesser unterscheidet, die mit der externen Krone (23) in Eingriff vorliegt.

5. Baugruppe nach einem der vorstehenden Ansprüche, **dadurch gekennzeichnet, dass** die externe Krone (23) einen radialen Befestigungsflansch (25) beinhaltet, an dem eine radiale Lasche (42) der Rinne (41) befestigt ist, wobei der radiale Befestigungsflansch (25) Mittel (34) zum Ausstoß des Schmiermittels zu der Außenseite des Untersetzungsgetriebes (16) beinhaltet.

6. Baugruppe nach dem vorstehenden Anspruch, **dadurch gekennzeichnet, dass** die externe Krone (23) aus zwei Halbkronen (23a, 23b) gebildet ist, die jeweils einen ersten Halbflansch (25a) und einen zweiten Halbflansch (25b) beinhalten, wobei der erste Halbflansch (25a) und der zweite Halbflansch (25b) den radialen Befestigungsflansch (25) bilden und durch Befestigungselemente (26) aneinander befestigt sind.

7. Baugruppe nach Anspruch 5 oder 6, **dadurch gekennzeichnet, dass** die Sammelzone (43) der Rinne (41) in Bezug auf eine Mittelebene (P) der externen Krone (23) von dem radialen Befestigungsflansch (25) senkrecht zu der Längsachse X axial versetzt ist.

8. Baugruppe nach einem der Ansprüche 5 bis 7, **dadurch gekennzeichnet, dass** die Sammelzone (43) der Rinne (41) durch eine Rückhaltewand (44) abgegrenzt ist, die einen axialen Schnitt in U-, C- oder halbkreisförmiger Form aufweist, wobei die Rückhaltewand (44) mit der radialen Lasche (42) mittels einer Führungswand (45) verbunden ist, die in Bezug auf die Längsachse X geneigt ist.

9. Baugruppe nach Anspruch 8, **dadurch gekennzeichnet, dass** die Führungswand (45) der Rinne (41) an der Verbindungsstelle mit der Rückhaltewand (44) einen Wendepunkt (49b) aufweist.

10. Baugruppe nach einem der Ansprüche 5 bis 6, **dadurch gekennzeichnet, dass** die Sammelzone (43) der Rinne (41) gegenüber des radialen Befestigungsflansches (25) vorliegt.

11. Baugruppe nach einem der vorstehenden Ansprüche, **dadurch gekennzeichnet, dass** die Ablassvorrichtung (50) ein erstes Ende (52), das in der Sammelzone (43) angeordnet ist, und ein zweites Ende (53) beinhaltet, das an der Außenseite der Sammelzone (43) angeordnet ist.

12. Baugruppe nach einem der vorstehenden Ansprüche, **dadurch gekennzeichnet, dass** die Ablassvorrichtung (50) mindestens eine Leitung (51) beinhaltet, die mehrere Abschnitte (55, 56, 57) beinhaltet, die sich entlang untereinander verschiedener Richtungen erstrecken, wobei die Leitung (51) einen Eingang (52) beinhaltet, der in der Sammelzone (43) der Rinne (41) derart mündet, um das Schmiermittel, das sich in der Sammelzone (43) befindet, in Richtung einer Schmiermittelablasszone abzulassen, die sich an der Außenseite der Rinne (41) befindet.

13. Baugruppe nach einem der Ansprüche 1 bis 10, **dadurch gekennzeichnet, dass** die Ablassvorrichtung (50) mindestens einen Deflektor (63) beinhaltet, von dem ein Abschnitt (64) in der Sammelzone (43) der Rinne (41) angeordnet ist, wobei der erste Abschnitt (64) eine Pralloberfläche (65) aufweist, die derart konfiguriert ist, um das Schmiermittel, das sich in der Sammelzone (43) befindet, in Richtung einer Schmiermittelablasszone abzulassen, die sich an der Außenseite der Rinne (41) befindet.

14. Baugruppe nach einem der vorstehenden Ansprüche, **dadurch gekennzeichnet, dass** die Ablassvorrichtung (50) ein in der Sammelzone (43) angeordnetes Ende beinhaltet, und die derart abgeschrägt ist, um das Schmiermittel, das sich in der Sammelzone (43) befindet, in Richtung einer Schmiermittelablasszone abzulassen, die sich an der Außenseite der Rinne (41) befindet.

15. Turbotriebwerk (1), beinhaltend eine Baugruppe nach einem der vorstehenden Ansprüche.

## Claims

1. A turbomachine assembly (1) extending about a longitudinal axis (X) and comprising:
- a speed reduction gear (16) comprising a sun gear pinion (20), planet gears pinions (21) and an external ring gear (23), the planet gears pinions being in mesh on the one hand with the sun gear pinion and on the other hand with the external ring gear (23), and
- a recovering gutter (41) for recovering a lubricant ejected by centrifugal effect from the speed reduction gear (16) during operation, the gutter (41) being arranged around the external ring gear (23) and comprising an area (43) for collecting the lubricant received by ejection, the gutter (41) being secured in rotation to the external ring gear (23),
**characterised in that** the assembly comprises a device (50) for evacuating the lubricant towards the outside of the collection area (43), the evacuation device (50) being intended to be connected to a stator of the turbomachine (1) and extending at least partly into the collection area (43) of the gutter (41), the evacuation device (50) being configured so as to evacuate the lubricant situated in the collection area (43) towards a lubricant evacuation area situated outside the gutter (41).

2. The assembly as claimed above, **characterised in that** the external ring gear (23) is movable in rotation about the longitudinal axis (X).

3. The assembly according to one of the preceding claims, **characterised in that** each planet gear pinion comprises the same toothing meshing with the sun gear pinion (20) and the external ring gear (23).

4. The assembly (16) according to any one of claims 1 to 2, **characterised in that** each planet gear pinion (21) comprises a first toothing of a first mean diameter meshing with the sun gear pinion (20), and a second toothing of a second mean diameter, different from the first mean diameter, meshing with the external ring gear (23).

5. The assembly according to any one of the preceding claims, **characterised in that** the external ring gear (23) comprises a radial attachment flange (25) to which a radial leg (42) of the gutter (41) is attached, the radial attachment flange (25) comprising means (34) for ejecting the lubricant outside the speed reduction gear (16).

6. The assembly according to the preceding claim, **characterised in that** the external ring gear (23) is formed by two half-ring gears (23a, 23b) which respectively comprise a first half-flange (25a) and a second half-flange (25b), the first half-flange (25a) and the second half-flange (25b) forming the radial attachment flange (25) and being attached against each other by attachment members (26).

7. The assembly according to claim 5 or 6, **characterised in that** the collection area (43) of the gutter (41) is axially offset from the radial attachment flange (25) with respect to a median plane (P) of the external ring gear (23) perpendicular to the longitudinal axis X.

8. The assembly according to any one of claims 5 to 7, **characterised in that** the collection area (43) of the gutter (41) is delimited by a retention wall (44) having a U-shaped, C-shaped or semi-circular axial cross-section, the retention wall (44) being connected to the radial leg (42) via a guide wall (45) which is inclined with respect to the longitudinal axis X.

9. The assembly as claimed in claim 8, **characterised in that** the guide wall (45) of the gutter (41) has an inflection point (49b) at the junction with the retention wall (44).

10. The assembly according to any one of claims 5 to 6, **characterised in that** the collection area (43) of the gutter (41) faces the radial attachment flange (25).

11. The assembly according to any one of the preceding claims, **characterised in that** the evacuation device (50) comprises a first end (52) arranged in the collection area (43) and a second end (53) arranged outside the collection area (43).

12. The assembly according to any one of the preceding claims, **characterised in that** the evacuation device (50) comprises at least one pipe (51) comprising a plurality of segments (55, 56, 57) extending in different directions from one another, the pipe (51) comprising an inlet (52) which opens into the collection area (43) of the gutter (41) so as to evacuate the lubricant located in the collection area (43) towards a lubricant evacuation area located outside the gutter (41).

13. The assembly according to any one of claims 1 to 10, **characterised in that** the evacuation device (50) comprises at least one deflector (63), a first segment (64) of which is arranged in the collection area (43) of the gutter (41), the first segment (64) having a deflecting surface (65) configured so as to evacuate the lubricant located in the collection area (43) towards a lubricant evacuation area located outside the gutter (41).

14. The assembly according to any one of the preceding claims, **characterised in that** the evacuation device (50) comprises an end arranged in the collection area (43) and which is bevelled so as to evacuate the lubricant located in the collection area (43) towards a lubricant evacuation area located outside the gutter (41).

15. A turbomachine (1) comprising an assembly according to any one of the preceding claims.
